# EUROPÄISCHE PATENTSCHRIFT

(11) **EP 3 180 466 B1**
(45) Veröffentlichungstag und Bekanntmachung des Hinweises auf die Patenterteilung: **16.01.2019**
(21) Anmeldenummer: 15730712.5
(22) Anmeldetag: 09.06.2015
(51) Int. Cl.: D02G 3/48

(54) **HYBRIDKORD ZUR VERWENDUNG ALS FESTIGKEITSTRÄGER IN EINER GÜRTELBANDAGE EINES FAHRZEUGLUFTREIFENS**
HYBRID CORD FOR USE AS REINFORCEMENT IN A BELT BANDAGE OF A PNEUMATIC VEHICLE TIRE
CÂBLE HYBRIDE DESTINÉ À ÊTRE UTILISÉ COMME SUPPORT DE FIXATION DANS UN BANDAGE DE CEINTURE D'UN PNEUMATIQUE DE VÉHICULE

(30) Priorität: 15.08.2014 DE 102014216260
(43) Veröffentlichungstag der Anmeldung: 21.06.2017
(73) Patentinhaber: Continental Reifen Deutschland GmbH, 30165 Hannover (DE)
(72) Erfinder: REESE, Wolfgang, 31228 Peine (DE); LUDWIG, Reinhard, 31848 Bad Münder (DE); VOLK, Heiner, 31535 Neustadt (DE); KRAMER, Thomas, 32049 Herford (DE); NEUMANN, Marcel, 30161 Hannover (DE)
(74) Vertreter: Finger, Karsten
(86) Internationale Anmeldenummer: PCT/EP2015/062750
(87) Internationale Veröffentlichungsnummer: WO 2016/023656

(56) Entgegenhaltungen:
- WO-A1-97/06297
- WO-A1-2009/052844
- WO-A1-2014/102719

## Beschreibung

Die Erfindung betrifft einen Hybridkord zur Verwendung als Festigkeitsträger in einer Gürtelbandage eines Fahrzeugluftreifens aus wenigstens zwei miteinander endverdrehten Garnen, wobei wenigstens ein erstes Garn ein hochmoduliges Garn mit einer bestimmten Garnfeinheit ist und wobei ein weiteres Garn ein niedermoduliges Garn ist und wobei dieses weitere niedermodulige Garn eine geringere Garnfeinheit als das erste Garn aufweist. Die Erfindung betrifft ferner einen Fahrzeugluftreifen, welcher eine Gürtelbandage mit einem derartigen Hybridkord als Festigkeitsträger aufweist.

Ein derartiger Hybridkord ist aus der WO 97/06297 bekannt. Das hochmodulige Garn ist ein Aramid-Garn, während das niedermodulige Garn ein Polyamid-Garn ist. Der Hybridkord ist derart konstruiert, dass eine bestimmte konstruktive Dehnung des Aramidgarnes, welches rein vom Material her eine geringe Dehnfähigkeit aufweist, ermöglicht ist.

Mit dem Begriff "hochmoduliges Garn" ist ein Garn gemeint, welches aus einem hochmoduligen Material besteht. Mit dem Begriff "niedermoduliges Garn" ist ein Garn gemeint, welches aus einem niedermoduligen Material besteht.
Dabei werden das niedermodulige Garn und das hochmodulige Garn anhand der in der nachfolgenden Tabelle 1 beschriebenen Werte in (mN/tex) definiert. Es ist die Kraft bestimmt, die jeweils auf ein Garn bei 1% Dehnung und bei 2% Dehnung aufgebracht werden muss, normiert auf die Garnfeinheit in tex. Ermittelt wird nach ASTM D885.

**Tabelle 1**

| Garn / Dehnung | 1% | 2% |
|---|---|---|
| Niedermodulig | < 150 mN/tex | < 200 mN/tex |
| Hochmodulig | > 300 mN/tex | > 500 mN/tex |

Um bei Fahrzeugluftreifen, insbesondere beim Hochgeschwindigkeitseinsatz, eine Erhebung des Reifens durch die im Fahrbetrieb auftretenden Fliehkräfte zu verhindern, ist es bekannt, bei einem Fahrzeugluftreifen, der im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort durch Umschlingen zugfester Wulstkerne verankert ist, einen radial außen befindlichen, Profilrillen aufweisenden Gummilaufstreifen und einen Gürtel zwischen dem Gummilaufstreifen und der Karkasse aufweist, eine Gürtelbandage vorzusehen. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger in Form von Korden, die in Gummi eingebettet sind.

Die Bandage wird bei der Reifenherstellung in Form von Lagen mit in eine unvulkanisierte Kautschukmischung eingebetteten Festigkeitsträgern aufgebracht, die auf den Gürtel gewickelt oder gespult werden. Die Festigkeitsträger werden für solche Lagen in Kautschuk eingebettet, indem eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit einer Kautschukmischung durchläuft. Bei der Bombage und Vulkanisation des Reifens erhebt/dehnt sich der Reifen in der Regel im Schulterbereich bis 2 % und im Mittenbereich bis 4 % im Vergleich zum unvulkanisierten Rohling, wenn der Rohling auf einer flachen Trommel gewickelt wird.

Die Festigkeitsträger der Bandage sollen bei der Reifenherstellung eine ausreichende Erhebung bei der Bombage und in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit gewährleisten.

Als Festigkeitsträger für die Bandage sind bereits unterschiedlichste Korde vorgeschlagen worden. So sind beispielsweise aus der EP-B 0 335 588, der EP-B 0 661 179 und der EP-B 1 475 248 für die Festigkeitsträgerkorde in der Gürtelbandage Hybridkorde offenbart, die aus Garnen mit hohem und mit niedrigerem Elastizitätsmodul zusammengedreht sind. Die in diesen Schriften genannten Hybridkorde weisen spezielle Kraft-Dehnungs-Verhalten auf. Die Korde weisen in einem Zugkraft-Dehnungs-Diagramm bei geringer Dehnung zunächst eine geringe Steigung der Kurve auf; bei höherer Dehnung steigt dann die Kurve überproportional stark an. In diesem letzten Bereich ist eine geringe weitere Dehnung mit hohem Kraftaufwand verbunden. Dieses Kraft-Dehnungs-Verhalten ermöglicht die Erhebung bei der Bombage und der Vulkanisation und macht den Reifen hochgeschwindigkeitstauglich.

Dokument WO 2014/102719 A1 betrifft eine Hybridkordstruktur zur Verwendung in der Reifenproduktion, welche einen Basalt-Garn und einen Polyamid-Garn aus Nylon oder Aramid umfasst (vgl. Anspruch 1 des Dokuments WO 2014/102719 A1).

Dokument WO 2009/052844 A1 betrifft einen Reifen umfassend ein durch ein Hybridgarn verstärktes Strukturelement (vgl. Beschreibungsseite 1, Absatz 1). Der Hybridgarn kann aus einem ersten und einem zweiten Multifilamentgarn zusammengezwirnt sein (vgl. Anspruch 1 des Dokuments WO 2009/052844 A1). Das erste Multifilamentgarn kann beispielsweise Nylon, Rayon, Polyethylen-Terephthalat-Polymer oder Metall umfassen (vgl. Anspruch 5 des Dokuments WO 2009/052844 A1). Das zweite Multifilamentgarn kann beispielsweise eine Faser aus aromatischem Polyamid, aus Polyketon, aus Polyvinylalkohol, aus Cellulose, aus Glas, aus Carbon oder einer Mischung aus diesen umfassen (vgl. Anspruch 28 des Dokuments WO 2009/052844 A1). Das erste und zweite Multifilamentgarn kann verschiedene Titer aufweisen (vgl. Beschreibungsseite 10 des Dokuments WO 2009/052844 A1).

Aus der DE 10 2006 031 780 A1 ist zudem ein Hybridkord aus einem Aramid-Garn und einem Nylon-Garn bekannt, bei dem das Aramid-Garn dünner als das Nylongarn ist. Bei dieser Konstruktion hat sich jedoch gezeigt, dass das als Füllgarn dienende Nylon-Garn, welches das Aramid-Garn geometrisch helixförmig auslenkt um dieses konstruktiv dehnbar zu machen, der Dehnung des Aramid-Garnes im Wege ist. So springt das Aramid-Garn früher als erwünscht an und die notwendige Dehnung ist nicht erreicht.

Der Erfindung liegt die Aufgabe zugrunde, mit einfachen Mitteln einen Hybridkord für die Gürtelbandage eines Fahrzeugluftreifens bereitzustellen, welcher in der Herstellung kostengünstig ist und welcher die Hochgeschwindigkeitstauglichkeit des diesen Hybridkord in der Gürtelbandage aufweisenden Reifens deutlich verbessert.

Gelöst wird die gestellte Aufgabe erfindungsgemäß dadurch, dass der Anteil des hochmoduligen Garnes im Hybridkord 85 -95 Gew.% ist, dass die Differenz der Garnfeinheit eines hochmoduligen Garnes zur Garnfeinheit des weiteren niedermoduligen Garnes ≥ 800 dtex ist und dass die Bruchdehnung eines hochmoduligen Garnes in einem Bereich von 1%-8% und die des niedermoduligen Garnes in einem Bereich von 9%-30% liegt.

Der erfindungsgemäße Hybridkord zeichnet sich durch eine extreme Asymmetrie hinsichtlich der Garnfeinheiten eines hochmoduligen Garnes zum niedermoduligen Garn auf, während der Anteil des hochmoduligen Materials im Hybridkord sehr hoch ist und 85-95 Gew.% beträgt. Das Garn aus dem hochmoduligen Material ist "dick" ausgeführt, während das zweite Garn, das aus niedermoduligem Material besteht, im Vergleich zum hochmoduligen Garn extrem "dünn" ausgeführt ist. Diese extreme Asymmetrie hinsichtlich der Garnfeinheiten im Hybridkord hat sich überraschenderweise als sehr geeignet für den Einsatz in der Gürtelbandage erwiesen. Der Hybridkord weist unter geringem Kraftaufwand die für die Erhebung notwendige Dehnungfähigkeit und ab ca. 3% bis 4% Dehnung nur noch eine sehr geringe Dehnungsfähigkeit auf.

Anfänglich wirkt vorrangig das eine sehr geringe Garnfeinheit aufweisende niedermodulige Garn. Dieses ist besonders vorteilhaft für die Resterhebung des Rohreifens in der Heizform. Bei größeren Dehnungen wirkt hauptsächlich das dicke hochmodulige Garn, wodurch das Umfangswachstum bei hoher Geschwindigkeit gering gehalten wird. Der Hybridkord ist optimal an die gestellten Anforderungen - Zulassen der Resterhebung und geringes Umfangswachstum bei hoher Geschwindigkeit - angepasst.

Der erfindungsgemäße Hybridkord weist ein niedermoduliges Garn und wenigstens ein oder mehrere hochmodulige Garne auf.

Die Bruchdehnung wird ermittelt nach ASTM D885.

Vorteilhaft ist es, wenn die Bruchdehnung des hochmoduligen Garnes in einem Bereich von 3%-6% und die des niedermoduligen Garnes in einem Bereich von 15%-25% liegt.

Vorteilhaft ist es, wenn dieser zwei hochmodulige Garne der gleichen Feinheit und ein niedermoduliges Garn kleiner Feinheit aufweist. Die erzeugte größere Asymmetrie bedingt einen erwünschten flacheren Anfangsbereich der Kraft-/Dehnungskurve.

Zweckmäßig ist es, wenn die Differenz der Garnfeinheit eines hochmoduligen Garnes zur Garnfeinheit des weiteren niedermoduligen Garnes ≥ 1150 dtex ist. Die erzeugte größere Asymmetrie bedingt einen erwünschten noch flacheren Anfangsbereich der Kraft-/Dehnungskurve.

Vorteilhaft ist es, wenn der Anteil des hochmoduligen Garnes im Hybridkord 90-95 Gew% ist und dass die Differenz der Garnfeinheit eines hochmoduligen Garnes zur Garnfeinheit des weiteren niedermoduligen Garnes ≥ 1400 dtex ist. Bis zu einem Optimum erzeugt ein höherer Aramid-Anteil und eine große Differenz zum niedrigmoduligen Material zunehmend flachere Anfangsbereiche der Kraft-/Dehnungskurve.

Vorteilhafterweise besteht das hochmodulige Garn aus einem der nachfolgend genannten Materialien: Carbonfaser, Glasfaser, Basalt, aromatisches Polyamid.

Vorteilhafterweise besteht das niedermodulige Garn aus einem Polyamid oder einem Polyester. Bei den Polyamiden (PA) kann es sich um die Polyamide PA 4.6, PA 6, PA 6.6, PA 10.10, PA 11 und/oder PA12, bevorzugt um PA 6.6 oder PA 10.10, handeln. Bei den Polyestern kann es sich um die Polyester Polyethylennaphthalat (PEN), Polyethylenfuranoat (PEF), Polybutylenterephthalat (PBT), Polybutylennaphttalat (PBN), Polypropylenterephthalat (PPT), Polypropylennaphthalat (PPN), Polyethylenterephthalat (PET), High-Modulus Low-Shrinkage-PET (HMLS-PET), insbesondere um thermoplastische Polyester und/oder vernetzte ungesättigte Polyester handeln.

In einer bestimmten Ausführung weist der Hybridkord die Konstruktion Aramid 1680 x 2 + Nylon 700 x 1 oder die Konstruktion Carbonfaser 1600 x 2 + Nylon 700 x 1 auf. Es sind zwei verdrehte Aramid-Garne bzw. Carbonfaser-Garne mit einer Feinheit von je 1680 dtex bzw. von je 1600 dtex mit einem Nylon-Garn der Feinheit von 700 dtex miteinander endverdreht.

In einer anderen Ausführung der Erfindung weist der Hybridkord die Konstruktion Aramid 1680 x 2 + Nylon 470 x 1 oder die Konstruktion Carbonfaser 1600 x 2 + Nylon 470 x 1 auf. Es sind zwei verdrehte Aramid-Garne bzw. Carbonfaser-Garne mit einer Feinheit von je 1680 dtex bzw. von je 1600 dtex mit einem Nylon-Garn der Feinheit von 470 dtex miteinander endverdreht.

In einer wiederum anderen Ausführung der Erfindung weist der Hybridkord die Konstruktion Aramid 1680 x 2 + Nylon 235 x 1 oder die Konstruktion Carbonfaser 1600 x 2 + Nylon 235 x 1 auf. Es sind zwei verdrehte Aramid-Garne bzw. Carbonfaser-Garne mit einer Feinheit von je 1680 dtex bzw. von je 1600 dtex mit einem Nylon-Garn der Feinheit von 235 dtex miteinander endverdreht.

Die Erfindung betrifft ebenfalls einen Fahrzeugluftreifen in Radialbauart mit einem mehrlagigen Gürtel und einer den Gürtel radial außen abdeckenden Gürtelbandage, welche als Festigkeitsträger einen Hybridkord gemäß einer oder mehreren der vorgenannten Ausführungen aufweist.

Ein bevorzugtes Ausführungsbeispiel ist ein Hybridkord aus zwei Aramid-Garnen mit je einer Garnfeinheit von 1680 dtex und aus einem Nylon-Garn mit einer Garnfeinheit von 470 dtex. Die Aramid-Garne weisen eine Erstverdrehung mit einer Verdrehungszahl von je 300 T/m (Turns per meter), entweder in Z-Richtung oder in S-Richtung, auf. Das Nylon-Garn weist ebenfalls eine Erstverdrehung mit einer Verdrehungszahl von 300 T/m, entsprechend der Drehrichtung der Aramid-Garne auf.

Die beiden Aramid-Garne und das eine Nylon-Garn werden zu einem Hybridkord endverdreht, dessen Drehrichtung entgegengesetzt zu jener der einzelnen Garne ist. So wird beispielsweise bei einer Drehrichtung S der Garne der Kord in die Richtung Z gedreht. Die Verdrehungszahl des Kordes beträgt 300 T/m.

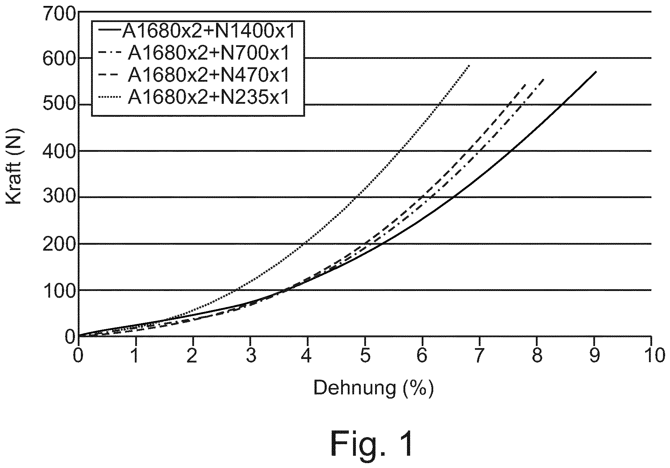

In Fig.1 gibt Kraft-Dehnungskurven von gedippten erfindungsgemäßen Hybridkorden für den Einsatz in einer Gürtelbandage an. "Gedippt" bedeutet: Der Cord wurde in einer dem Fachmann bekannten Weise nach dem Twisten und bedarfsweise Weben mit einer Dip-Lösung imprägniert und damit gummifreundlich ausgerüstet und unter Temperatureinwirkung verstreckt.

Es sind Kraft-Dehnungskurven von 3 erfindungsgemäßen Hybridkorden der Konstruktionen Aramid 1680x2 + Nylon 235x1, Aramid 1680x2 + Nylon 470x1 und Aramid 1680x2 + Nylon 700x1 sowie von einem Hybridkord des Standes der Technik der Konstruktion Aramid 1680x2 + Nylon 1400x1 dargestellt. Es ist ersichtlich, dass insbesondere die erfindungsgemäßen Korde Aramid 1680x2 + Nylon 470x1 und Aramid 1680x2 + Nylon 700x1 einen flacheren, also vorteilhafteren Verlauf bis ca. 3% - 4% Dehnung aufweisen als der Kord des Standes der Technik. Zudem sind die beiden vorgenannten erfindungsgemäßen Korde im weiteren Verlauf weit höhermodulig, steigen also deutlich steiler an als der Kord des Standes der Technik, welches sich vorteilhaft auf die Hochgeschwindigkeitstauglichkeit des Reifens auswirkt.

## Patentansprüche

1. Hybridkord zur Verwendung als Festigkeitsträger in einer Gürtelbandage eines Fahrzeugluftreifens aus wenigstens zwei miteinander endverdrehten Garnen, wobei wenigstens ein erstes Garn ein hochmoduliges Garn mit einer bestimmten Garnfeinheit ist und wobei ein weiteres Garn ein niedermoduliges Garn ist und wobei dieses weitere niedermodulige Garn eine geringere Garnfeinheit als das erste Garn aufweist,
**dadurch gekennzeichnet,**
**dass** der Anteil des hochmoduligen Garnes im Hybridkord 85-95 Gew.% ist, dass die Differenz der Garnfeinheit eines hochmoduligen Garnes zur Garnfeinheit des weiteren niedermoduligen Garnes ≥ 800 dtex ist und dass die Bruchdehnung eines hochmoduligen Garnes in einem Bereich von 1%-8% und die des niedermoduligen Garnes in einem Bereich von 9%-30% liegt.

2. Hybridkord nach Anspruch 1, **dadurch gekennzeichnet, dass** die Bruchdehnung des hochmoduligen Garnes in einem Bereich von 3%-6% und die des niedermoduligen Garnes in einem Bereich von 15%-25% liegt.

3. Hybridkord nach einem oder mehreren der vorangehenden Ansprüche, **dadurch gekennzeichnet, dass** dieser zwei hochmodulige Garne der gleichen Feinheit und ein niedermoduliges Garn aufweist.

4. Hybridkord nach einem oder mehreren der vorangehenden Ansprüche, **dadurch gekennzeichnet, dass** die Differenz der Garnfeinheit eines hochmoduligen Garnes zur Garnfeinheit des weiteren niedermoduligen Garnes ≥ 1150 dtex ist.

5. Hybridkord nach einem oder mehreren der vorangehenden Ansprüche, **dadurch gekennzeichnet, dass** der Anteil des hochmoduligen Garnes im Hybridkord 90-95 Gew% ist und dass die Differenz der Garnfeinheit eines hochmoduligen Garnes zur Garnfeinheit des weiteren niedermoduligen Garnes ≥ 1400 dtex ist.

6. Hybridkord nach einem oder mehreren der vorangehenden Ansprüche, **dadurch gekennzeichnet, dass** das hochmodulige Garn aus Carbonfaser, Glasfaser, Basalt oder einem aromatischen Polyamid besteht.

7. Hybridkord nach einem oder mehreren der vorangehenden Ansprüche, **dadurch gekennzeichnet, dass** das niedermodulige Garn aus einem Polyamid oder einem Polyester besteht.

8. Hybridkord nach der Kombination der Ansprüche 3, 6 und 7, **dadurch gekennzeichnet, dass** dieser die Konstruktion Aramid 1680 x 2 + Nylon 700 x 1 oder die Konstruktion Carbonfaser 1600 x 2 + Nylon 700 x 1 aufweist.

9. Hybridkord nach der Kombination der Ansprüche 3-4, 6 und 7, **dadurch gekennzeichnet, dass** dieser die Konstruktion Aramid 1680 x 2 + Nylon 470 x 1 oder die Konstruktion Carbonfaser 1600 x 2 + Nylon 470 x 1 aufweist.

10. Hybridkord nach der Kombination der Ansprüche 3, 4, 6 und 7 oder 3, 5, 6 und 7, **dadurch gekennzeichnet, dass** dieser die Konstruktion Aramid 1680 x 2 + Nylon 235 x 1 oder die Konstruktion Carbonfaser 1600 x 2 + Nylon 235 x 1 aufweist.

11. Fahrzeugluftreifen in Radialbauart mit einem mehrlagigen Gürtel und einer den Gürtel radial außen abdeckenden Gürtelbandage, welche als Festigkeitsträger einen Hybridkord gemäß einem oder mehreren der Ansprüche 1 bis 10 aufweist.

## Claims

1. Hybrid cord for use as reinforcement in a belt bandage of a pneumatic vehicle tire comprising at least two yarns that are twisted together at the ends, at least one first yarn being a high-modulus yarn with a specified yarn fineness and a further yarn being a low-modulus yarn and this further low-modulus yarn having a lower yarn fineness than the first yarn,
**characterized**
**in that** the proportion of the high-modulus yarn in the hybrid cord is 85-95% by weight, in that the difference in the yarn fineness of a high-modulus yarn in comparison with the yarn fineness of the further low-modulus yarn is ≥ 800 dtex and in that the elongation at break of a high-modulus yarn lies in a range of 1%-8% and that of the low-modulus yarn lies in a range of 9%-30%.

2. Hybrid cord according to Claim 1, **characterized in that** the elongation at break of the high-modulus yarn lies in a range of 3%-6% and that of the low-modulus yarn lies in a range of 15%-25%.

3. Hybrid cord according to one or more of the preceding claims, **characterized in that** this cord comprises two high-modulus yarns of the same fineness and one low-modulus yarn.

4. Hybrid cord according to one or more of the preceding claims, **characterized in that** the difference of the yarn fineness of a high-modulus yarn in comparison with the yarn fineness of the further low-modulus yarn is ≥ 1150 dtex.

5. Hybrid cord according to one or more of the preceding claims, **characterized in that** the proportion of the high-modulus yarn in the hybrid cord is 90-95% by weight and the difference of the yarn fineness of a high-modulus yarn in comparison with the yarn fineness of the further low-modulus yarn is ≥ 1400 dtex.

6. Hybrid cord according to one or more of the preceding claims, **characterized in that** the high-modulus yarn consists of carbon fiber, glass fiber, basalt or an aromatic polyamide.

7. Hybrid cord according to one or more of the preceding claims, **characterized in that** the low-modulus yarn consists of a polyamide or a polyester.

8. Hybrid cord according to the combination of Claims 3, 6 and 7, **characterized in that** this cord has the construction aramid 1680 x 2 + nylon 700 x 1 or the construction carbon fiber 1600 x 2 + nylon 700 x 1.

9. Hybrid cord according to the combinations of Claims 3-4, 6 and 7, **characterized in that** this cord has the construction aramid 1680 x 2 + nylon 470 x 1 or the construction carbon fiber 1600 x 2 + nylon 470 x 1.

10. Hybrid cord according to the combination of Claims 3, 4, 6 and 7 or 3, 5, 6 and 7, **characterized in that** this cord has the construction aramid 1680 x 2 + nylon 235 x 1 or the construction carbon fiber 1600 x 2 + nylon 235 x 1.

11. Pneumatic vehicle tire of a radial type of construction with a multi-ply breaker belt and a belt bandage that covers the belt radially on the outside and comprises as reinforcement a hybrid cord according to one or more of Claims 1 to 10.

## Revendications

1. Câble hybride destiné à être utilisé en tant que renfort dans un bandage de ceinture d'un pneu de véhicule, constitué par au moins deux fils vrillés l'un avec l'autre aux extrémités, au moins un premier fil étant un fil à module élevé ayant un titre de fil déterminé et un autre fil étant un fil à module faible, et cet autre fil à module faible présentant un titre de fil plus faible que le premier fil, **caractérisé en ce que** la proportion du fil à module élevé dans le câble hybride est de 85 à 95 % en poids, **en ce que** la différence entre le titre de fil d'un fil à module élevé et le titre de fil de l'autre fil à module faible est ≥ 800 dtex, et **en ce que** l'allongement à la rupture d'un fil à module élevé se situe dans une plage allant de 1 % à 8 % et celui du fil à module faible dans une plage allant de 9 % à 30 %.

2. Câble hybride selon la revendication 1, **caractérisé en ce que** l'allongement à la rupture du fil à module élevé se situe dans une plage allant de 3 % à 6 % et celui du fil à module faible dans une plage allant de 15 % à 25 %.

3. Câble hybride selon une ou plusieurs des revendications précédentes, **caractérisé en ce que** celui-ci comprend deux fils à module élevé du même titre et un fil à module faible.

4. Câble hybride selon une ou plusieurs des revendications précédentes, **caractérisé en ce que** la différence entre le titre de fil d'un fil à module élevé et le titre de fil de l'autre fil à module faible est ≥ 1 150 dtex.

5. Câble hybride selon une ou plusieurs des revendications précédentes, **caractérisé en ce que** la proportion du fil à module élevé dans le câble hybride est de 90 à 95 % en poids et **en ce que** la différence entre le titre de fil d'un fil à module élevé et le titre de fil de l'autre fil à module faible est ≥ 1 400 dtex.

6. Câble hybride selon une ou plusieurs des revendications précédentes, **caractérisé en ce que** le fil à module élevé est constitué par des fibres de carbone, des fibres de verre, du basalte ou un polyamide aromatique.

7. Câble hybride selon une ou plusieurs des revendications précédentes, **caractérisé en ce que** le fil à module faible est constitué par un polyamide ou un polyester.

8. Câble hybride selon la combinaison des revendications 3, 6 et 7, **caractérisé en ce que** celui-ci comprend la construction aramide 1680 x 2 + nylon 700 x 1 ou la construction fibres de carbone 1600 x 2 + nylon 700 x 1.

9. Câble hybride selon la combinaison des revendications 3 à 4, 6 et 7, **caractérisé en ce que** celui-ci comprend la construction aramide 1680 x 2 + nylon 470 x 1 ou la construction fibres de carbone 1600 x 2 + nylon 470 x 1.

10. Câble hybride selon la combinaison des revendications 3, 4, 6 et 7 ou 3, 5, 6 et 7, **caractérisé en ce que** celui-ci comprend la construction aramide 1680 x 2 + nylon 235 x 1 ou la construction fibres de carbone 1600 x 2 + nylon 235 x 1.

11. Pneu de véhicule à structure radiale comprenant une ceinture multicouche et un bandage de ceinture recouvrant radialement la ceinture à l'extérieur, qui comprend en tant que renfort un câble hybride selon une ou plusieurs des revendications 1 à 10.
